(19) Europäisches Patentamt
European Patent Office
Office européen des brevets

(11) Veröffentlichungsnummer: **0 440 034 A1**

(12) **EUROPÄISCHE PATENTANMELDUNG**

(21) Anmeldenummer: **91100383.8**

(22) Anmeldetag: **15.01.91**

(51) Int. Cl.5: **C08L 67/02**, C08L 33/10, C08L 25/14, //(C08L67/02,33:10)

(30) Priorität: **02.02.90 DE 4003088**

(43) Veröffentlichungstag der Anmeldung: **07.08.91 Patentblatt 91/32**

(84) Benannte Vertragsstaaten: **AT BE CH DE DK ES FR GB IT LI NL SE**

(71) Anmelder: **RÖHM GMBH**
**Kirschenallee**
**W-6100 Darmstadt(DE)**

(72) Erfinder: **Siol, Werner, Dr.**
**Goerdelerweg 17**
**W-6100 Darmstadt-Eberstadt(DE)**
Erfinder: **Fischer, Jens-Dieter, Dr.**
**Ernst-Ludwig-Weg 44**
**W-6101 Bickenbach(DE)**
Erfinder: **Süfke, Thomas, Dr.**
**An der Fuchsenhütte 27**
**W-6101 Rossdorf(DE)**
Erfinder: **Felger, Erwin**
**Jägertorstrasse 29**
**W-6100 Darmstadt(DE)**
Erfinder: **Frank, Klaus**
**Ober-Ramstädter-Strasse 15a**
**W-6109 Mühltal(DE)**

(54) **Verträgliche Polymermischungen.**

(57) Die Anmeldung betrifft verträgliche Polymermischungen PM mit Polyestern als Mischungskomponente, die aus

A) 0,1 - 99,9 Gew.-% eines Polyesters P1 aufgebaut aus Einheiten der Formel I

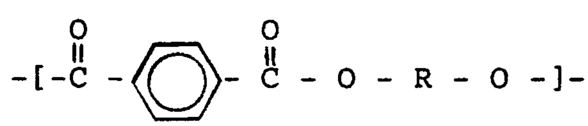

(I)

worin

R

für einen Rest $-(CH_2)_m-$ oder für einen Rest

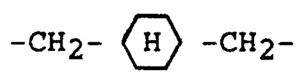

und wobei

m

für eine Zahl von 2 bis 6 steht und

B) 99,9 - 0,1 Gew.-% eines Polyacrylats P2 aufgebaut zu 20 - 100 Gew.-% aus halogenfreien Monomeren der Formel II

EP 0 440 034 A1

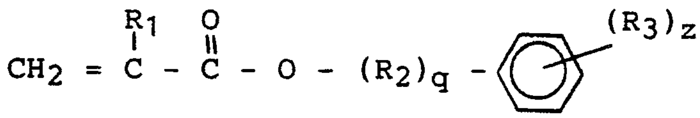

(II)

worin

$R_1$

für Wasserstoff oder Methyl

$R_2$

für eine abstandhaltende Gruppe mit 1 bis 6 Gliedern

$R_3$

für einen Alkylrest, Alkoxylrest oder Aminoalkyl- oder -dialkylrest mit 1 bis 6 Kohlenstoffatomen und

q

für null oder eins und

z

für null, eins oder zwei steht,

bestehen.

Gegenstand der Erfindung

Die Erfindung betrifft verträgliche Polymermischungen aus Polyarylacrylaten und Polyestern.

Stand der Technik

Gemäß der allgemeinen Definition stellen "Polyester" makromolekulare Substanzen dar, die durch die Anwesenheit von Carboxylester-Gruppen in den sich wiederholenden Einheiten der Hauptketten charakterisiert sind (vgl. H. Mark et al. Encyclopedia of Polymer Science and Technology, 2nd Ed. Vol. 12, 1 - 75, J. Wiley-Interscience 1988, R. Vieweg et al. Kunststoff-Handbuch, Bd. VIII, Polyester, Carl Hanser Verlag 1973, Ullmanns Encyclopädie der Techn. Chemie, 4. Auflage, Bd. 19, S. 61 - 88, Verlag Chemie 1980). Die Herstellungsverfahren bedienen sich dabei entweder der Selbst-Polycondensation von Hydroxycarbonsäuren oder der Polycondensation von Dicarbonsäuren mit Dihydroxyverbindungen.
Die ersteren Polymeren können durch die allgemeine Formel

$$-(-O-R'-\overset{\overset{\displaystyle O}{\|}}{C}-)-_n \;,$$

worin R'für einen geeigneten Kohlenwasserstoffrest steht, wiedergegeben werden, die letzteren durch die allgmeine Formel

$$-(-O-R''-O-\underset{\underset{\displaystyle O}{\|}}{C}-R'''-\underset{\underset{\displaystyle O}{\|}}{C}-)-_{n'}$$

worin R" für einen geeigneten abstandhaltenden Kohlenwasserstoffrest und R''' für den Kohlenwasserstoffrest einer Dicarbonsäure steht und n bzw. n'in beiden Fällen einen Wert besitzt, der einem Molgewicht des Polymeren von > 10 - 15 x $10^3$ entspricht. Von besonderer technischer Bedeutung haben sich die Polymeren erwiesen, in denen R" für $-(CH_2)_x-$ steht, mit den Bedeutungen x = 2,4 oder 6 und speziell die Polymeren, worin R" für $-C_2H_4-$ und R''' für $-C_6H_4-$ steht (Polyethylenterephthalat, PET) und worin R" für $-C_4H_8-$steht (Polybutylenterephthalat, PBT).
Die Polyalkylenterephthalate sind im allgemeinen thermoplastisch im Spritzguß bzw. durch Extrusion verarbeitbar. Teile aus PET zeichnen sich u.a. durch Härte und gute Abriebfestigeit bei hoher Dimensionsstabilität aus.
Sie besitzen im allgemeinen eine befriedigende Schlagzähigkeit, aber eine nur mäßige Kerbschlagzähigkeit. Das wichtigste Anwendungsgebiet für lineare Polyester stellen Chemiefasern (Polyesterfasern, Kurzzeichen PES nach DIN 60 001 T1) dar. Daneben gewinnt der Einsatz von gesättigten Polyestern als Spritzgieß- und Extrusionsformmasse sowie als Folienmaterial an Bedeutung (vgl. Kunststoffe 79, 925-926 (1989).
Es hat daher in der Vergangenheit nicht an Bemühungen gefehlt, die Eigenschaften dieser Massenkunststoffe zu verbessern, wobei besonderes Gewicht auf die Verbesserung der Kerbschlagzähigkeit gelegt wurde. Eine größere Zahl von Schutzrechten befaßt sich z.B. mit der Modifikation von Polyestern durch Abmischen derselben mit Polyacrylaten bzw. Mischpolymerisaten derselben.

Dem praktischen Ziel der Schlagzähmodifikation von Polyestern gilt eine größere Gruppe von Schutzrechten, wobei auf bekannte Konzepte zurückgegriffen werden konnte. Glasfaserverstärktes PBT kann beispielsweise vorteilhaft mit Methylacrylat-Methylmethacrylat-Copolymeren abgemischt werden (JP-A 74 90 345; Chem Abstr. 82, 99221a). Verbesserte Umformbarkeit wird z.B. für Abmischungen von PET mit einem (teil)verseiften Methylmethacrylat-Methylacrylat-Copolymeren beansprucht (vgl. JP-A 84 47 256; Chem. Abstr. 101, 131 801p). Die Ölbeständigkeit eines Gemisches aus > 50 Gew.-Teilen PMMA und < 50 Gew.-Teilen gesättigtem Polyester wie PET wird in JP-A 84 152 945 (Chem. Abstr. 102, 79 763g) hervorgehoben. Zur Verbesserung der Kerbschlagzähigkeit dient die Abmischung von Polyalkylenterephthalat mit 5 - 30 Gew.-% eines Acrylat-Pfropfpolymeren wie z.B. eines Butylacrylat-Methylmethacrylat Pfropfcopolymeren (vgl. DE-A 33 28 568).

Verbesserung der Kerbschlagzähigkeit wird laut EP-A 50 265 auch durch Abmischung von thermoplastischen Polyestern mit Kernschale-Polymerisaten, bestehend aus einer Acrylat-Zähphase als Kern und einer harten Schale aus PMMA oder Styrol erreicht.

In Verbindung mit einer Silan-Kupplungskomponente haben Mischungen von PBT und Polyacrylaten gemäß EP-A 190 030 gute Schlagzähigkeit und Dehnbarkeit. Beobachtet wird eine erniedrigte Umformtemperatur.
Aus der JP-A 87 149 746 (Chem. Abstr. 108, 7017t) ist eine Mischung aus PET und Polyglycidylmethacrylat und/oder Fettsäurepolyester bekannt. Pfropf-Copolymere von Tetrahydrofurfurylestern der (Meth)-acrylsäure auf Poly-α -Olefine sind ebenfalls als Zusätze zu Polyestern beschrieben (vgl. DE-A 35 25 253). Masterbatches für das Einbringen von Pigmenten in Polyester stellen nach der JP-A 79 129 050 (Chem. Abstr. 92, 77 480p) Ethylacrylat-Ethylen-copolymere dar.

Der Einfluß eines Zusatzes von PMMA auf das Kristallisationsverhalten von PET wurde von V.M.Nadkarny et al (Polym. Eng. Sci. 1987, 27 (6) 451-457) untersucht. Praktische Anwendung als ofenfestes Geschirr wird für kristallisierbares Polyethylenterephthalat vorgesehen, das mit 4 - 29 Gew.-% eines Kern-Schale-Polymeren, beispielsweise aufgebaut aus Allylmethacrylat-Butylacrylat-Butylenglykoldiacrylat als Kern und Polymethylmethacrylat als Schale und mit 0 - 14,5 Gew.-% Polycarbonat modifiziert ist (vgl. US-A 4 713 268). Andere Modifizierungsverfahren bedienen sich eines Allylmethacrylat-Butylacrylat-Methylacrylatcopolymeren, auf das Methylmethacrylat gepfropft wurde (JP-A 82 137 347; Chem. Abstr. 98, 55092 k).
Der Frage der Polymerverträglichkeit in den Mischungen wird im Stand der Technik nicht explizit nachgegangen, jedoch lassen die angezeigten Verwendungen bzw. die berichteten Mattierungseffekte erkennen, daß es sich um unverträgliche Polymermischungen handelt.
So wird in der JP-A 76 75749 (Chem. Abstr. 85, 124 964s) ein Perlglanzeffekt für Mischungen aus beispielsweise 70 Gew.-Teilen PMMA und 30 Gew.-Teilen PBT berichtet. Als Indiz für Polymerunverträglichkeit muß auch der berichtete Perlglanzeffekt für Kosmetikbehälter aus PET und PMMA Vgl. JP-A 82 15929; Chem. Abstr. 96, 200978u) gewertet werden. Entsprechendes gilt für Mischungen aus PET und Methylacrylat-Methylmethacrylat-Copolymeren (vgl. JP-A 81 161472; Chem. Abstr. 96, 124179s; JP-A 82 63353; Chem. Abstr. 97, 183608z; JP-A 82 96817, Chem. Abstr. 97, 199244p; JP-A 82 98327, Chem. Abstr. 97, 199245q). Mit dem Zusatz von Polyacrylaten zu Polyestern wird ein Mattierungseffekt bei Filmen erreicht (EP-A 184 028). Auch die JP-A 78 133254 (Chem. Abstr. 90, 122 459k) berichtet über Perlglanzeffekte von Mischungen von Acrylatcopolymeren mit Acrylnitril und Dien-Rubber-Pfropfpolymeren und arom. Polyestern. Aus demselben Grunde muß auch für die iridisierenden ternären Polymermischungen aus PET, Polystyrol und PMMA gemäß JP-A 80 03 471 (Chem. Abstr. 92, 199 282w) Unverträglichkeit angenommen werden.

Die Schlagzähmodifizierung von Polybutylenterephthalat-Kunststoffen, deren Wärmeformbeständigkeit und Witterungsbeständigkeit werden von D. Rempel in "Kunststoffe", 1986, (76) 900 - 904 dargestellt. Als Schlagzäh-Modifizierungmittel werden z.B. mit Styrol und Methylmethacrylat gepfropfte Butadien-Styrol-Kautschuke empfohlen (vgl. NL-A 73 12 510, DE-A 30 04 942). Ebenfalls untersucht wurden mit Acrylat modifizierte Styrol-Acrylnitril-Copolymere als Schlagzäh-Komponente (z.B. DE-A 27 58 497; JP-A 84 11347, Chem. Abstr. 100, 211063u).
In anderen Druckschriften wird der Zusatz von Ethylen(Meth)acrylsäureester-Glycidylmethacrylat-Copolymeren (vgl. PCT-Int. Appl. WO 85 03 718) oder von Ethylen-Glycidylmethacrylat-Vinylacetat-Copolymeren (JP-A 78 117 049, Chem. Abstr. 90, 55830j) berichtet.

Als eine weitere Mischungskomponente für Polyester zusätzlich zu Schlagzähmodifizierungsmitteln wird auch Polycarbonat eingesetzt (vgl. JP-A 76 44160, Chem Abstr. 85, 47657g; PCT Int. Appl. WP 80 00 972).
Zur Flammfestausrüstung hat man halogenhaltige Gruppen, insbesondere halogenierte Aromaten in die Polymeren eingeführt. So wird der Zusatz von Poly(pentabrombenzyl)acrylaten (JP-A 84 06248, Chem. Abstr. 100, 193020w; JP-A 84 20351, Chem. Abstr 101, 8220w, JP-A 84 20350, Chem. Abstr. 101, 24542h; JP-A 84 11351, Chem. Abstr. 101, 92117y) empfohlen.
Auf die offenbar vorhandene Unverträglichkeit ( = Nichtmischbarkeit) von Polyestern mit Poly(meth)acrylaten wurde bereits hingewiesen.
Bei den Schlagzähmodifikationsmitteln erfolgt eine Phasenanbindung des Elastomeren an die Polyester-Phase über das PMMA, bzw. das Styrol-MMA-Copolymere oder über das Styrol-Acrylnitrilpolymere obwohl Verträglichkeit zwischen dem Polyester und diesem Polymeren nicht gegeben ist.

Zur Anbindung müssen in der Regel Reaktivkomponenten wie z.B. Glycidylmethacrylat copolymerisiert werden. In der Literatur wird Mischbarkeit für die Systeme Poly-ethylenadipat-PMMA und Poly-ethylensebacinat-PMMA aufgrund der beobachteten Schmelzpunktsdepression angegeben (vgl. M. Natov et al. J. Polym. Scie. Part C16, 4197 (1968)).
Auch aus technischer Sicht spielen die nicht-**verträglichen** Mischungen von Polyestern mit anderen Polymeren die beherrschende Rolle.

Aufgabe und Lösung

Unter einer Reihe von Gesichtspunkten ist es vorteilhaft verträgliche Polymermischungen zur Verfügung zu haben. Sie gewährleisten Homogenität des Materials und somit eine gewisse Konstanz der Materialdaten. Sie eröffnen günstige Möglichkeiten zur Modifizierung der Verarbeitungsbedingungen und zur Beeinflussung der Materialeigenschaften.

Es wurde nun gefunden, daß Mischungen aus halogenfreien Polyaryl(meth)acrylaten und Polyester ausgezeichnete Verträglichkeit aufweisen, wobei der Arylrest durch Alkylreste oder insbesondere durch Alkoxyl oder Aminoalkylgruppen substituiert sein kann. Der Alkylrest kann jeweils bis zu 6 Kohlenstoffatome besitzen. Die Erfindung betrifft insbesondere Polymermischungen PM gebildet aus

A) 0,1 bis 99,9 Gew.-%, insbesondere 1 bis 99, ganz besonders 10 bis 90 Gew.-% eines Polyesters P1 aufgebaut aus Einheiten der Formel I

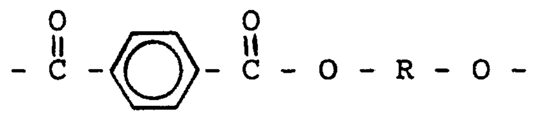

(I)

worin

R

für einen Rest $(CH_2)m$ oder für einen Rest

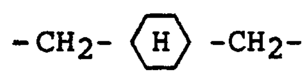

steht und wobei m für eine Zahl von 2 bis 6 steht, und

B) 99,9 - 0,1 Gew.-%, insbesondere 99-1 , ganz besonders 90 bis 10 Gew.-% eines Polymeren P2, aufgebaut zu 20 - 100 Gew.-% aus halogenfreien Monomeren der Formel

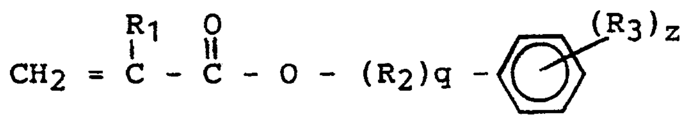

(II)

worin

$R_1$

für Wasserstoff oder Methyl

$R_2$

für eine abstandhaltende Gruppe mit 1 - 6 Gliedern, vorzugsweise ausgewählt aus der Gruppe der Alkylidene mit 1 bis 6 Kohlenstoffatomen in der Kette und der Gruppe $-(CH_2)p-O-$, wobei q null oder 1 und p eine Zahl von 2 - 6 bedeutet,

$R_3$

für einen Alkylrest, Alkoxyrest oder Aminoalkyl- oder dialkylrest mit 1 bis 6 Kohlenstoffatomen und z für null, 1 oder 2 steht.

Die Endabsättigung der Einheiten der Formel I entspricht der üblicherweise anzutreffenden, insbesondere der von Handelsprodukten. Vorzugsweise handelt es sich um die Hydroxyalkylideneinheit aus überschüssigem Diol oder um Säuregruppen aus überschüssiger Dicarbonsäure. Darüber hinaus können auch monofunktionelle Reagentien zum Kettenabschluß eingesetzt werden, beispielsweise Alkoxylfunktionen. Besonders bevorzugt sind Polymere P2, die zu 40 - 100 Gew.-%, ganz besonders bevorzugt zu 51 - 99 Gew.-% aus Monomeren der Formel II aufgebaut sind. Die Summe der Bestandteile A) und B) in den Polymermischungen PM beträgt im allgemeinen 100 Gew.-%.

Die Polyester

Die im Sinne der vorliegenden Erfindung anzuwendenden Polyester, die vorzugsweise thermoplastisch verarbeitbar sind, sind im allgemeinen zu mindestens 70 Gew.-% und vorzugsweise bis zu 100 Gew.-% -

abzüglich der Endgruppen - aus den Einheiten gemäß Formel (I) aufgebaut. Die restlichen Monomereinheiten bestehen entweder aus Mono-Hydroxycarbonsäuren wie p-Hydroxybenzoesäure oder bevorzugt aus Einheiten vom Typ

$$-(-\overset{O}{\overset{\|}{C}}-Ar-\overset{O}{\overset{\|}{C}}-O-R-O-)- \qquad (IA)$$

worin R die oben bezeichneten Bedeutungen besitzt und worin Ar für 1,3-Phenyliden oder Naphthyliden steht.

Besonders bevorzugt sind Polyester der Terephthalsäure, die zu weniger als 10 Gew.% Iso-Phthalsäure-haltige Einheiten aufweisen. Besonders bevorzugt sind Polyester, die ausschließlich aus repetierenden Einheiten der Formel (I) aufgebaut sind, insbesondere vom Typ PET und PBT.

Die Polyester besitzen im allgemeinen ein Molgewicht Mw von > 10 x $10^3$ und bis ca. 500 x $10^3$ wobei das Molgewicht meist indirekt über die Lösungsviskosität $\eta$sp/c (in cm/g) - gemessen mittels Kapillarviskosimeter - bestimmt wird. Bevorzugt kommen die Polyester der Formel I zur Anwendung, insbesondere das Polyethylenterephthalat und das Polybutylenterephthalat aber auch z.B. Copolyester auf Basis von 1,4-Bis-(hydroxymethyl)cyclohexan, Terephthalsäure und Isophthalsäure sind geeignet. Betont werden soll, daß es sich bei den anzuwendenden Polyestern in der Regel um kommerzielle Produkte handelt. Die Polyester können gegebenenfalls noch an sich bekannte Zusätze, z.B. Nucleierungsmittel, Pigmente, Flammschutzmittel (vgl. Ullmann, loc.cit) enthalten.

Die Polyaryl(meth)acrylate

Im Sinne der vorliegenden Erfindung bilden halogenfreie Polyaryl(meth)acrylate die zweite Polymerkomponente der Polymermischungen PM. Die dafür infrage kommenden Monomeren sind an sich bekannt:
Genannt seien z.B. das Phenyl(meth)acrylat und dessen Alkyl-, Alkoxy- und Alkylamin-substituierten Derivate mit 1 - 6 Kohlenstoffatomen in den Alkylresten, insbesondere das p-Methoxyphenyl-(meth)acrylat. Ferner die N,N-Dialkylamino-substituierten Phenyl(meth)-acrylate, so z.B. das p-N,N-Dimethylaminophenylmethacrylat.
Von Interesse sind aber auch die nicht direkt mit der (Meth)acryloylgruppe verbundenen (Alkyloxy)-phenylmethacrylate, s. z.B. das Phenoxyethylmethacrylat ($R_2$ = $-CH_2-CH_2-O-$).
Besonders hervorzuheben sind jedoch Alkoxyphenyl(meth)acrylate insbesondere Methoxyphenyl- und das Phenylmethacrylat.

Die Polyaryl(meth)acrylate können auch aus mehreren Arten von Monomeren, vorzugsweise solchen der Formel II aufgebaut sein. Sofern die Polymeren P2 nicht ausschließlich aus Monomeren der Formel II aufgebaut sind, kommen als Comonomere sonstige Ester der (Meth)acrylsäure, insbesondere solche der Formel III

$$CH_2=\overset{R_1}{\overset{|}{C}}-\overset{O}{\overset{\|}{C}}-OR_4 \qquad (III)$$

worin
$R_4$
für eine aliphatischen Rest mit 1 bis 12 Kohlenstoffatomen, oder für einen mit mindestens einem Rest X substituierten Alkylrest mit 2 bis 8 Kohlenstoffatomen, wobei X für eine -OH, $-OR_5$ oder eine $-NR_6R_7$-Gruppe steht, wobei $R_5$ für einen Alkylrest mit 1 bis 6 Kohlenstoffatomen oder einen Alkoxyrest mit 1 bis 6 Kohlenstoffatomen und $R_6$ für Wasserstoff oder einen Alkylrest mit 1 bis 6 Kohlenstoffatomen und $R_7$ für einen Alkylrest mit 1 bis 6 Kohlenstoffatomen steht oder worin $R_6$ und $R_7$ gegebenenfalls unter Einbeziehung eines weiteren Stickstoffs oder eines Sauerstoffs einen fünf- oder sechsgliedrigen, vorzugsweise gesättigten Ring bilden
oder Styrol, p- oder $\alpha$-Methylstyrol
infrage.

Besonders bevorzugt sind solche Polymeren P2, die weniger als 10 Gew.-%, insbesondere weniger als 1 Gew.-% und ganz besonders bevorzugt 0 Gew.-% an Monomeren mit Epoxygruppen (wie Glycidylmethacylat) oder Säuregruppen wie (Meth)acrylsäuren enthalten.

Die Herstellung der Homo- bzw. Copolymerisate P2 erfolgt nach bekannten Verfahren. (Vgl. H. Rauch-Puntigam, Th. Völker Acryl- und Methacrylverbindungen, Springerverlag 1967). Wenn auch häufig prinzipiell eine Herstellung durch anionische Polymerisation oder Group-Transfer-Polymerisation (siehe auch O.W. Webster et al., J. Am. Chem. Soc., 105, 5706 (1983)) möglich ist, so ist doch die bevorzugte Herstellungsform die radikalische Polymerisation. Dabei kann sowohl Substanz- als Lösungs- oder Emulsionspolymerisation durchgeführt werden.

Bei den radikalischen Polymerisationsverfahren finden vorzugsweise die üblichen radikalischen Initiatoren, beispielsweise peroxidische, insbesondere organische Peroxiverbindungen oder Azoverbindungen in Mengen von 0,01 bis 1 Gew.-% (bezogen auf die Monomeren) Anwendung. Als Regler können z.B. die üblichen Schwefelregler in den bewährten Konzentrationen z.B. in Mengen von 0,01 bis 2 Gew.-% (bezogen auf die Monomeren) angewendet werden.

Die Molgewichte M der Polymerisate P2 liegen in der Regel oberhalb von 3 000 im allgemeinen im Bereich von 10 000 bis 2 000 000, vorzugsweise 20 000 bis 300 000 (Lichtstreuung). Bei der Auswahl der Monomerkomponenten, die als Comonomere bei P2 eingesetzt werden sollen, ist darauf zu achten, daß die Glastemperatur Tg des resultierenden Polymerisats die technische Anwendbarkeit des Gesamtsystems PM nicht einschränkend beeinflußt.

## Herstellung der Mischungen PM

Die verträglichen Mischungen PM können durch die unterschiedlichen Verfahren hergestellt werden, sie werden z.B. durch intensives mechanisches Vermischen der Komponenten P1 und P2 in der Schmelze, im Extruder, Kneter usw. erzeugt. (Vgl. Kirk-Othmer "Encyclopedia of Chemical Technology" 3rd Ed. Vol. 18, pg. 443 - 478, J. Wiley, 1982).
Das Mischen der Schmelze geschieht im geeigneten, im allgemeinen relativ hohen Temperaturbereich, beispielsweise bei 220 bis 320 Grad C, als Faustregel bei ca. 280 Grad C.

Es resultiert regelmäßig eine glasklare Schmelze und zwar nach bisher vorliegenden Beobachtungen in allen angewendeten Proportionen der Polymerkomponenten.
In der Regel erstarrt die Schmelze beim Abkühlen kristallin. Die Bildung einer glasklaren Schmelze kann als ein sicheres Indiz für das Vorliegen einer einzigen homogenen Phase im schmelzflüssigen Zustand gewertet werden.

## Vorteilhafte Eigenschaften der Polyacylacrylat/Polyester-Blends

Zunächst sind die erfindungsgemäßen Polyester-Polyarylacrylat-Mischungen verträglich, d.h. die Mischungen dieser Polymeren ergeben eine homogene Schmelze. Damit besteht die Möglichkeit, das Polyarylacrylat als Verarbeitungshilfsmittel für den Polyester (insbesondere für Polyethylenterephthalat und Polybutylenterephthalat) einzusetzen. So kann vor allem hochmolekulares Polyarylacrylat mit einem Molekulargewicht von Mw = 100 000 - 2 000 000, insbesondere 300 000 - 1 200 000, als Extrusionshilfsmittel für Polyester eingesetzt werden. In der Regel enthalten derartige Polyester/Polyarylacrylat-Blends 0,5 - 20, insbesondere 1 - 10 Gew.-% Polyarylacrylat.
Der breitere Verarbeitungsspielraum der Blends im Vergleich zum reinen Polyester erlaubt auch das Thermoformen der Mischungen, insbesondere das Blasformen oder Tiefziehen.
Ein weiterer Vorteil der Blends insbesondere beim Einsatz in sehr hochmolekularen Polyarylacrylaten ist in der Herstellung von Schaumstoffen zu sehen. So sollten unter Verwendung der üblichen Treibmittel Polyester/Polyarylacrylat-Blends mit 3 - 30 Gew.-% Polyarylacrylat, insbesondere 5 - 20 Gew.-% Polyarylacrylat/Polyesterschaumstoffe zugänglich sein.

Die gute Verträglichkeit des Polyarylacrylats mit dem Polyester gestattet es auch, gut haftende Schichten von Polyarylacrylat auf Polyester zu erzeugen.
So können z.B. gut aufeinander haftende Verbundsysteme aus Polyester und Polyarylacrylat hergestellt werden.
Dazu kann beispielsweise Polyester mit Polyarylacrylat lackiert werden. Besonderes Interesse gilt der Coextrusion bzw. dem Cospritzguß. Von besonderem Interesse sind solche Polymerkompositionen, in denen ein Formkörper (z.B. eine Platte oder Folie) aus Polyester mit einem Mantel aus Polyarylacrylat umgeben ist.
Vorzugsweise enthält das als Mantel verwendete Polyarylacrylat an sich bekannte UV-Schutzmittel in

Anteilen um 0,1 - 10 Gew.-% und schützt so die Gesamtkomposition gegen Verwitterung.

Im Vergleich zu nicht verträglichen Polymerkompositionen haben diese Polymerkompositionen aus Polyester und Polyarylacrylat folgende Vorteile: a) bessere Haftung der Schichten aufeinander, b) kein Abfallproblem, da die Abfallstücke aufgrund der guten Verträglichkeit problemlos wieder eingearbeitet werden können.

Von besonderem Interesse sind auch Polymermischungen PM', die neben dem Polyarylacrylat und dem Polyester noch 1 - 40 Gew.-% eines weiteren Polymeren P3 enthalten, wobei gilt, daß das Polymere P3 weder mit dem Polymeren P1 noch dem Polymeren P2 noch mit der Polymermischung PM verträglich ist.

Besonders bevorzugt sind Mischungen PM' aus
60 - 99 (70 - 95) Gew.-% PM und
40 - 1 (30 - 5) Gew.-% eines Polymeren P3, das eine Glastemperatur < 0 Grad C aufweist und wenigstens teilweise (im allgemeinen zu wenigestens 5 Gew.-%) mit Polyarylacrylat kovalent verknüpft ist. Im allgemeinen ist P3 vernetzt und stellt eine Gummiphase dar. P3 ist also beispielsweise Polybutadien, Polyisopren oder ein anderes Polyolefin, z.B. EPDM oder ein Polyacrylat, z.B. Polyethyl-, Polybutyl- oder Poly-2-ethylhexylacrylat. In einem besonders bevorzugten Fall wird von einem Kern-Schale-Latex ausgegangen, wobei der Latex-Kern (Durchmesser 100 - 500 nm) aus den Elastomeren, z.B. vernetzten Polybutadien oder vernetzten Polybutylacrylat besteht. Auf diesen Kern ist eine Schale aus Polyarylacrylat aufgepfropft. (Zur Pfropfpolymerisation vgl. Houben-Weyl, Methoden der org. Chemie E20, Teil 1 S. 626f, Georg-Thieme-Verlag 1987)

Derartige Kern-Schale-Latices können nach Entfernen des Wassers z.B. durch Sprühtrocknung als Schlagzähmodifier für die Polyester eingesetzt werden. Dabei wird das Elastomere (z.B. das Polybutylacrylat) über das Polyacrylat an den Polyester gebunden. Derartige Polymermischungen lassen sich sehr gut verarbeiten und verbessern insbesondere die Kerbschlagzähigkeit des Polyesters.

Die folgenden Beispiele dienen zur Erläuterung der Erfindung (wobei sich die symbolischen Bezeichnungen auf die Formel II beziehen).

Die Bestimmung der Viskositätszahl J. [ml/g] erfolgt in Anlehnung an DIN 51 562, Teile 2 und 3 und Din 7745, Teil 2.

## BEISPIELE

### Beispiel 1

($R_1$ = $CH_3$, q = Null, $R_3$ = Wasserstoff, m = 2)

50 Teile Polyethylenterephthalat (Aldrich, Inhaerente Viskosität: 0,7) werden mit 10 Teilen Polyphenylmethacrylat (J = 46 ml/g) in einem Meßkneter bei 280 Grad C gemischt. Es resultiert eine glasklare, verträgliche Schmelze, die beim Abkühlen kristallin erstarrt.

### Beispiel 2

($R_1$ = $CH_3$, q = Null, $R_3$ = Wasserstoff, m = 4)

50 Teile Polybutylenterephthalat (Aldrich, No. 02123 KL) werden mit 10 Teilen Polyphenylmethacrylat (J = 46 ml/g) bei 280 Grad C gemischt. Es resultiert eine niedrigviskose, glasklare, verträgliche Schmelze, die beim Abkühlen kristallin erstarrt.

### Beispiel 3

Man wiederholt die Abmischung gemäß Beispiel 2, wählt jedoch ein anderes Mischungsverhältnis: 50 Teile Polybutylenterephthalat, 20 Teile Polyphenylmethacrylat. Auch diese Schmelze ist verträglich.

### Beispiel 4

($R_1$ = $CH_3$, q = Null, $R_3$ = $-O-CH_3$, Z = 1, m = 2)

50 Teile PET werden mit 5 Teilen Poly-p-methoxyphenylmethacrylat bei 280 Grad C im Meßkneter gemischt. Es resultiert eine glasklare, verträgliche Schmelze.

Beispiele 5 - 7

50 Teile PET werden mit 10, 20, 30 Teilen Poly-p-methoxyphenylmethacrylat gemischt. Man erhält stets eine glasklare, verträgliche Schmelze.

Beispiel 8

Synthese des Poly-p-methoxyphenylmethacrylats

250 g p-Methoxyphenylmethacrylat werden in 375 g Toluol unter Erwärmen gelöst, es wird filtriert. Nach Zugabe von 0,25 g Dodecylmercaptan und 0,125 g tert.Butylperneodecanoat (gelöst in 10 g Toluol) wird unter Schutzgas ($N_2$) 4 Stunden bei 80 - 85 Grad C gerührt. Nach Abkühlen auf Raumtemperatur wird das Polymere in Methanol ausgefällt und in Vacuum getrocknet. Es resultiert ein pulvriges Polymer
(J = 27,4 ml/g).

Beispiel 9

50 Teile PET werden mit 10 Teilen eines Copolymeren aus Phenylmethacrylat und Styrol bei 280 Grad C im Meßkneter gemischt. Man erhält eine klare, verträgliche Schmelze.

Beispiel 10

Synthese des Copolymeren aus Phenylmethacrylat und Styrol

50 g Styrol und 150 g Phenylmethacrylat werden in 200 g Toluol gelöst, es wird auf 70 Grad C erwärmt, mit einem inerten Schutzgas beschickt ($N_2$), es wird nacheinander 1 g tert.-Dodecylmercaptan und 1 g Dilaurylperoxid (gelöst in 10 g Toluol) zugesetzt. Man polymerisiert 3 Stunden bei 70 Grad C, kühlt ab und isoliert das Polymere durch Ausfällen in Methanol.
Nach Trocknung im Vacuum erhält man ein weißes Pulver.
(J = 46,1 ml/g).

Beispiel 11

Vergleichsbeispiel

50 Teile Polybutylenterephthalat werden mit 5 Teilen Polystyrol (PS 158K der BASF) bei 280 Grad C gemischt. Es resultiert eine trübe, unverträgliche Polymerschmelze.

Beispiel 12

Synthese eines hochmolekularen Polyphenylmethacrylates durch Emulsionspolymerisation

In einem 3 l-Witt'schen Topf mit Kühler, Rührer, Thermometer und Schutzgaseinleitung (Stickstoff) werden
600 g Phenylmethacrylat
900 9 Wasser
2 g Emulgator (Nonylphenol, umgesetzt mit 6 Mol Ethylenoxid, sulfatiert, Natrium-Salz)
mit 500 Up emulgiert (2 Minuten), dann wird die Rührerdrehzahl auf 150 Up zurückgenommen, 2 ppm $FeSO_4$ (bezogen auf das Monomere) und 0,4 g Kaliumperoxodisulfat zugesetzt und auf 40° C erwärmt. Sobald die Innentemperatur 40° C erreicht hat, wird die Polymerisation durch Zugabe von 0,33 g $Na_2S_2O_5$ - (in 5 g Wasser) gestartet. Im Verlauf der Polymerisation steigt die Innentemperatur auf ca. 60° C (Badtemperatur: 43° C). Nach ca. 1 1/2 Stunden wird auf Raumtemperatur gekühlt.
Zur Gewinnung des Polymerisat-Feststoffs wird die Dispersion eingefroren (- 15° C) und in heißem Wasser aufgetaut. Der erhaltene Feststoff wird abfiltriert und bei 90° C im Vacuum getrocknet.
(J = 280 ml/g)

Beispiel 13

Synthese eines hochmolekularen Copolymeren durch Emulsionspolymerisation

Man verfährt wie in Beispiel 12, wählt jedoch andere Einwaagen
800 g Phenylmethacrylat
200 g p-Methoxyphenylmethacrylat
1500 g Wasser
3,3 g $C_{15}$-Paraffinsulfonat, Natrium-Salz
Nach Emulgieren mit 500 Up und Zugabe von 2 ppm $FeSO_4$ und 0,67 g KPS wird bei 50° C durch Zugabe von 0,33 g $Na_2S_2O_5$ die Polymerisation gestartet. Nach Beendigung der Polymerisation wird die Dispersion auf Raumtemperatur gekühlt und zur Gewinnung des Polymerisat-Feststoffes eingefroren und in heißem Wasser wieder aufgetaut (Gefrierkoagulation). Es wird filtriert, mehrfach mit Wasser gewaschen und anschließend bei 90° C im Vacuum getrocknet.
J = 298 ml/g.

Beispiel 14

Beschichtung von Polybutylente ephthalat mit den Polymeren gemäß den Beispielen 8,12+13

Spritzgußplättchen (Dicke 3 mm) aus PBT (Vestodur 1000®der Fa. Hüls AG) werden mit ca. 10 - 20 %igen Lösungen der Polymeren gemäß Beispiel 8,12+13 in Methylpyrrolidon beschichtet (Teflon-Rakel, Naßschichtdicke: 120 $\mu$m, Dicke des getrockneten Films:
12-25 $\mu$m) und anschließend bei erhöhter Temperatur getrocknet (75° C im Vacuum). Einige Proben werden zusätzlich 1 Stunde bei 200° C getempert.
Nach dem Abkühlen wird die Haftung der Schicht auf dem PBT gemäß DIN 53151 bestimmt.

Beispiel 15 PBT mit einer Beschichtung aus Poly-p-methoxyphenylmethacrylat (Polymere gemäß Beispiel 8)

Messungen an der bei 75° C getrockneten Probe
Tesatest : 0 % Abriß
Gitterschnitt nach DIN 53151 mit nachfolgendem Tesatest: 5 % Abriß.

Messung an der bei 200° C getemperten Probe
Gitterschnitt nach DIN 53151 mit nachfolgendem Tesatest: 0 % Abriß

Beispiel 16 PBT mit einer Beschichtung aus Polyphenylmethacrylat (Polymeres gemäß Beispiel 12)
Messung an der bei 200° C getemperten Probe:
Gitterschnitt nach DIN 53151 mit nachfolgendem Tesatest: 0 % Abriß

Beispiel 17 PBT mit einer Beschichtung aus dem Copolymeren gemäß Beispiel 13
Messung an der bei 200° C getemperten Probe:
Gitterschnitt nach DIN 53151 mit nachfolgendem Tesatest: 0 % Abriß.
Polymere gemäß den Beispielen 12+13 zeigen demnach hervorragende Haftung auf PBT.

Beispiel 18 (Vergleichsbeispiel)

Man wiederholt den Versuch gemäß Beispiel 14 mit Polymethylmethacrylat als Beschichtungsmaterial (Plexiglas®8N der Fa. Röhm).
Messung an der bei 75° C getrockneten Probe.
Tesatest: 100 % Abriß
Messung an der bei 200° C getemperten Probe:
Gitterschnitt nach DIN 53151 mit nachfolgendem Tesatest: 100 % Abriß
Das Polymethylmethacrylat zeigt demnach keinerlei Haftung auf PBT.

Beispiel 19 Herstellen eines Verbundsystems durch Verpressen

0,24 g fein gemahlenes Polymerisat gemäß Beispiel 8 wird auf eine 3 mm dicke 24 $cm^2$ große PBT-Platte aufgebracht und bei 175° C aufgepreßt (Druck: 4 $KN/cm^2$, Preßdauer: 5 Minuten) Nach dem Abkühlen

erhält man eine hochglänzende Verbundplatte aus PBT mit Poly-p-methoxymethacrylat-Deckschicht. Gitterschnitt nach DIN 53151 mit nachfolgendem Tesatest: 0 % Abriß.

## Patentansprüche

1. Verträgliche Polymermischungen mit Polyestern als Mischungskomponente,

   dadurch gekennzeichnet,

   daß die Polymermischungen PM aus
   A) 0,1 - 99,9 Gew.-% eines Polyesters P1 aufgebaut aus Einheiten der Formel I

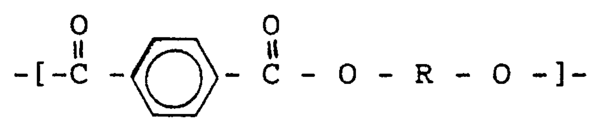 (I)

worin
R
für einen Rest $-(CH_2)_m-$ oder für einen Rest

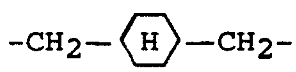

steht und wobei
m
für eine Zahl von 2 bis 6 steht und
B) 99,9 - 0,1 Gew.-% eines Polyacrylats P2 aufgebaut zu 20 - 100 Gew.-% aus halogenfreien Monomeren der Formel II

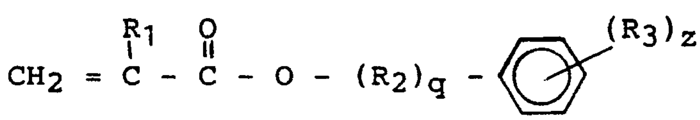 (II)

worin
$R_1$
für Wasserstoff oder Methyl
$R_2$
für eine abstandhaltende Gruppe mit 1 bis 6 Gliedern
$R_3$
für einen Alkylrest, Alkoxylrest oder Aminoalkyl- oder -dialkylrest mit 1 bis 6 Kohlenstoffatomen und
q
für null oder eins und
z
für null, eins oder zwei steht,

bestehen.

2. Verträgliche Polymermischungen gemäß Anspruch 1, dadurch gekennzeichnet, daß $R_2$ ausgewählt ist aus der Gruppe bestehend aus den Alkylidenen mit 1 bis 6 Kohlenstoffatomen in der Kette und dem Rest $-(CH_2)_pO-$ worin p für eine Zahl von 2 bis 6 steht.

3. Verträgliche Polymermischungen gemäß Anspruch 1, dadurch gekennzeichnet, daß der Polyester P1 ausgewählt ist aus der Gruppe der Polyethylenterephthalate und der Polybutylenterephthalate.

4. Polymermischungen PM', aufgebaut aus 60 - 99 Gew.-% der Polymermischung PM gemäß Anspruch 1 und 40 - 1 Gew.-% eines Polymeren P3, das eine Glastemperatur < 0 Grad C aufweist und wenigstens teilweise mit dem Polyacrylacrylat P2 gemäß Formel II kovalent verknüpft ist.

5. Verbundsystem, aufgebaut aus Polyester P1 gemäß Formel I in Anspruch 1 und Polyacrylat P2 gemäß Formel II in Anspruch 1.

6. Formkörper, bestehend aus Polymer P1 gemäß Formel I in Anspruch 1 mit einem Mantel aus Polyacrylat P2 gemäß Formel II in Anspruch 1.

Europäisches Patentamt

# EUROPÄISCHER RECHERCHENBERICHT

Nummer der Anmeldung

**EP 91 10 0383**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X<br>A | GB-A-2 105 351 (MITSUBISHI CHEMICAL IND. LTD.)<br>* Vergleichsbeispiele 3,6; Ansprüche 1,2 * | 1,3<br>2 | C 08 L 67/02<br>C 08 L 33/10<br>C 08 L 25/14 //<br>(C 08 L<br>67/02<br>C 08 L 33:10 ) |
| X | CHEMICAL ABSTRACTS Band 113, Nr. 2, 9. Juli 1990, Seite 66, Zusammenfassung Nr. 7727c, Columbus, Ohio, US;<br>& JP - A - 01295880 (TOMOEGAWA PAPER CO., LTD.) 29.11.1989<br>* Zusammenfassung * | 5,6 | |
| A | EP-A-0 142 336 (POLYPLASTICS CO. LTD.)<br>* Ansprüche 1,2 * | 1,3 | |
| A | FR-A-2 316 254 (DYNAMIT NOBEL AG)<br>* Ansprüche 1,10; Beispiel 51 * | 1-3 | |
| | | | RECHERCHIERTE SACHGEBIETE (Int. Cl.5) |
| | | | C 08 L |

Der vorliegende Recherchenbericht wurde für alle Patentansprüche erstellt

| Recherchenort | Abschlußdatum der Recherche | Prüfer |
|---|---|---|
| Berlin | 09 April 91 | VOIGTLAENDER R O J |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument